Europäisches Patentamt

European Patent Office

Office européen des brevets

(11) Veröffentlichungsnummer: **0 291 679 B1**

(12) **EUROPÄISCHE PATENTSCHRIFT**

(45) Veröffentlichungstag der Patentschrift: **03.03.93**

(51) Int. Cl.⁵: **B01D 71/64**

(21) Anmeldenummer: **88105388.8**

(22) Anmeldetag: **05.04.88**

Die Akte enthält technische Angaben, die nach dem Eingang der Anmeldung eingereicht wurden und die nicht in dieser Patentschrift enthalten sind.

(54) Verfahren und Herstellung einer integralasymmetrischen Membran.

(30) Priorität: **20.05.87 DE 3716916**

(43) Veröffentlichungstag der Anmeldung:
**23.11.88 Patentblatt 88/47**

(45) Bekanntmachung des Hinweises auf die Patenterteilung:
**03.03.93 Patentblatt 93/09**

(84) Benannte Vertragsstaaten:
**CH DE FR GB IT LI NL SE**

(56) Entgegenhaltungen:
**EP-A- 0 113 574**
**EP-A- 0 113 574**
**DE-A- 3 420 373**
**US-A- 4 156 597**

**PATENT ABSTRACTS OF JAPAN, Band 8, Nr. 232 (C-248)[1669], 25. Oktober 1984**

**CHEMICAL ABSTRACTS, Band 103, Nr. 8, 26. August 1985, S. 50, Spalte 1, Zusammenfassung Nr. 55109t, Columbus, Ohio, US**

**CHEMICAL ABSTRACTS, Band 106, Nr. 10, 09. März 1987, S. 54, Spalte 1, Zusammenfassung Nr. 68417d, Columbus, Ohio, US**

**CHEMICAL ABSTRACTS, Band 105, Nr. 6, 11. August 1986, S. 163, Spalte 1, Zusammenfassung Nr. 45678e, Columbus, Ohio, US; K.V. Peinemann et al: "Asymmetric polyetherimide membrane for helium separation"**

(73) Patentinhaber: **GKSS-FORSCHUNGSZENTRUM GEESTHACHT GMBH**
**Max-Planck-Strasse**
**W-2054 Geesthacht-Tesperhude(DE)**

(72) Erfinder: **Kneifel, Klemens**
**Schulstr. 10**
**W-2054 Geesthacht(DE)**
Erfinder: **Peinemann, Klaus-Viktor, Dr.**
**Husumer Str. 11**
**W-2057 Reinbek(DE)**
Erfinder: **Waldemann, Rudolf**
**Hardingstr. 7**
**W-2058 Lauenburg(DE)**

(74) Vertreter: **Schöning, Hans-Werner, Dipl.-Ing. et al**
**Patentanwälte Niedmers & Schöning Jessenstrasse 4**
**W-2000 Hamburg 50 (DE)**

**Beschreibung**

Die Erfindung betrifft ein Verfahren zur Herstellung einer integralasymmetrischen Membran zur Trennung von Flüssig- oder Gasgemischen, bei dem Membranbildner und Lösungsmittel gemischt, in eine geometrische Form gebracht und danach die Form in Kontakt mit Fällmittel gebracht und nachbehandelt wird, wobei der Membranbilder ein Polyetherimid ist, das mit der Fällung mit einem wassermischbaren Lösungsmittel zusammenführt wird.

Ein Verfahren dieser Art ist bekannt (EP-A-0 113 574). Das zur Herstellung der bekannten integralasymmetrischen Membran verwendete zusätzliche Quellmittel dient zur Vergrößerung des Porendurchmessers und zur Verringerung der Dicke einer dichten Schicht, wenn auf die intergralasymmtrischen Membran zusätzlich eine dünne Polymerschicht zur Bildung einer sogenannten Kompositmembran aufgebracht wird. Als Quellmittel werden dabei anorganische Salze und verschiedene organische Verbindungen, z.B. mehrwertige Alkohole und deren Derivate, sowie Polyalkohole oder dergl. genannt.

Der Nachteil der mit dem bekannten Verfahren erhaltenen Membranen liegt im wesentlichen darin, daß diese ausschließlich gering durchlässig sind, d.h. daß sie ausschließlich eine sehr geringe Porosität aufweisen, und sehr dicht und insgesamt verhältnismäßig dick sind, woraus sich wiederum der erhebliche Nachteil eines geringen Flusses ergibt.

Zudem ist aufgrund ihrer geringen Porosität eine Beschichtbarkeit mit einem gesonderten Film zur Bildung einer integralasymmetrischen Komposit-Membran sehr beschränkt, ggf. auch überhaupt nicht möglich. Schließlich wird mit dem bekannten Verfahren lediglich eine Membran mit karvernenhaltiger Unterstruktur geschaffen, die sich nur für geringe Drücke wegen ihrer geringen mechanischen Stabilität eignet.

Es ist Aufgabe der vorliegenden Erfindung eine integralasymmtrische Membran der eingangs genannten Art zu schaffen, die die vorausgehend gezeigte Nachteile nicht hat, mit der Membranen beliebig einstellbarer morphologischer Struktur, dichter oder mikroporöser, außen und/oder innenausgebildeter Haut, Permeabilität und, für den Fall als Hohlfäden ausgebildeter Membranen, guter mechanischer Festigkeit hergestellt werden können.

Gelöst wird die Aufgabe gemäß der Erfindung dadurch, daß das Quellmittel eine Element aus der Gruppe der Lactone enthält.

Durch das verwendete Quellmittel kann zum einen die Geschwindigkeit des Lösungsmittelaustausches beim Fällvorgang verringert und dadurch die morphologischen Eigenschaften beispielsweise bei der Herstellung als Hohlfäden ausgebildeten Membranen (Anzahl und Größe der Makroporen) beeinflußt werden und zum anderen die für den Spinnvorgang möglichst hohe Viskosität erreicht werden, ohne die Polymerkonzentration erhöhen und einen zusätzlichen Polymer zugeben zu müssen. Eine Erhöhung der Polymerkonzentration würde nämlich zu einer sehr dichten Membran führen, während man durch die Zugabe des Quellmittels im Gegensatz dazu eine noch offenere Membran bei gleichzeitiger Viskositätserhöhung erhält.

Die gleichen Vorteile erhält man bei der Verwendung eines Quellmittels in Form eines Dimethylsulfoxids gemäß einer anderen Lösung der Aufgabe der Erfindung.

Zusammenfassend kann gesagt werden, daß sich mit dem erfindungsgemäßen Verfahren Membranen herstellen lassen, die
eine kavernenhaltige Unterstruktur (Fingerstruktur) aufweisen, wie sie für den Einsatz bei niedrigen transmembranen Drücken und hohen Permeationraten, z.B. für dampfförmige oder flüssige Medien gefordert werden, oder
mit einer kavernenfreien Schwammstruktur, wie sie für die Anwendung bei hohen Drücken, z.B. in der Gasseparationstechnik benötigt werden.

Es können somit nicht nur Flach- sondern auch Hohlfadenmembranen mit dem erfindungsgemäßen Verfahren hergestellt werden. Damit ist die Membranmodulfertigung vereinfacht und es kann pro Modulvolumeneinheit mehr Membranfläche angeordnet werden. Die Membranherstellung ist einfach und die erhaltenen Membranen können auch zur Herstellung von Komposit-Membranen benutzt werden, wodurch der Einsatzbereich der Membranen erheblich erweitert wird.

Die aus dem Chemical Abstracts, 103, Zusammenfassung Nr. 55109t bekannte Filtrationsmembran wird für die sogenannte Ultrafiltration angewendet. Dabei werden als Lösungsmittelgemische Gemische aus N-Methylpyrrolidon-Ethylencarbonat-Ethylenglykol benutzt. Über die Morphologie der Unterstruktur der erhaltenen Membranen werden keine Angaben gemacht. Lactone als Quellmittel oder Dimethylsulfoxid als Quellmittel werden nicht erwähnt.

In Chemical Abstracts, 106, Zusammenfassung Nr. 68417d werden sogenannte Dreischichten-Komposite-Membranen auf Polyetherimid-Basis beschrieben. Die Schichten werden durch Plasmapolymerisation und Beschichten aufgetragen. Als Lösungsmittel wird ebenfalls wieder N-Methylpyrrolidon eingesetzt.

Die bekannten Membranen haben eine dichte, weitgehend porenfreie Haut, deren Fehlstellen durch die Beschichtung verschlossen wird. Während mit dem erfindungsgemääßen Verfahren auch eine mikroporöse Haut grundsätzlich hergestellt werden kann, ist eine derartig mikroporöse Haut bei der dort beschriebenen Gastrennmembran nicht möglich. Angaben über die Unterstruktur der Membran werden nicht gemacht.

Aus der EP-A-0 264 229 (Stand der Technik gemäß Art 54(3)EPÜ) ist ein Verfahren zur Herstellung von Membranen aus Polyimiden, insbesondere Polyetherimid, beschrieben. Als Lösungsmittel werden Gemische aus Dioxan, halogenierten Kohlenwasserstoffen und N-Pyrrolidon angegeben. Als Fällmittel werden Wasser, aromatische Kohlenwasserstoffe, Ketone und Gemische daraus genannt. Es werden in dieser Entgegenhaltung Membranen beschrieben, die $CO_2/CH_4$-Selektivitäten von 41,2 bis 50,7 haben, d.h. es handelt sich um Membranen ausschließlich mit einer dichten Haut. Aus dieser Entgegenhaltung ist bekannt, daß das Fehlstellen abdichtende Material dem Fällmittel zugegeben wird und sehr dünne Schichten im Bereich von 1$\mu$m gebildet werden.

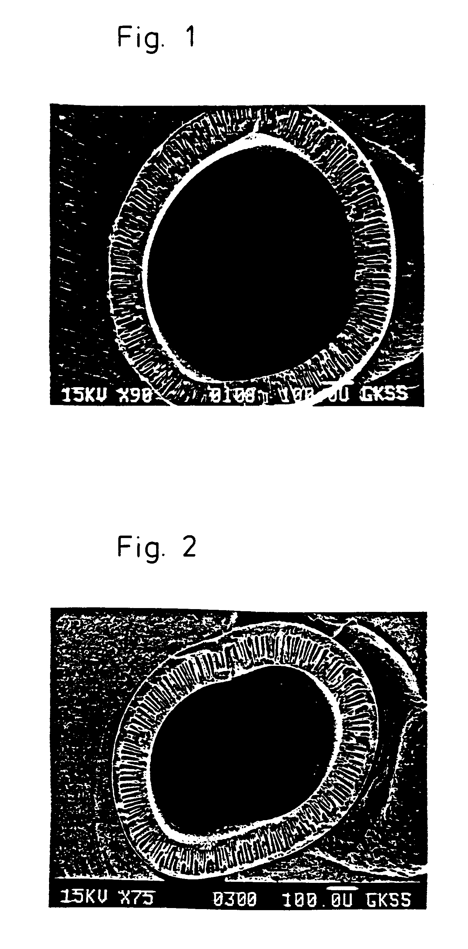

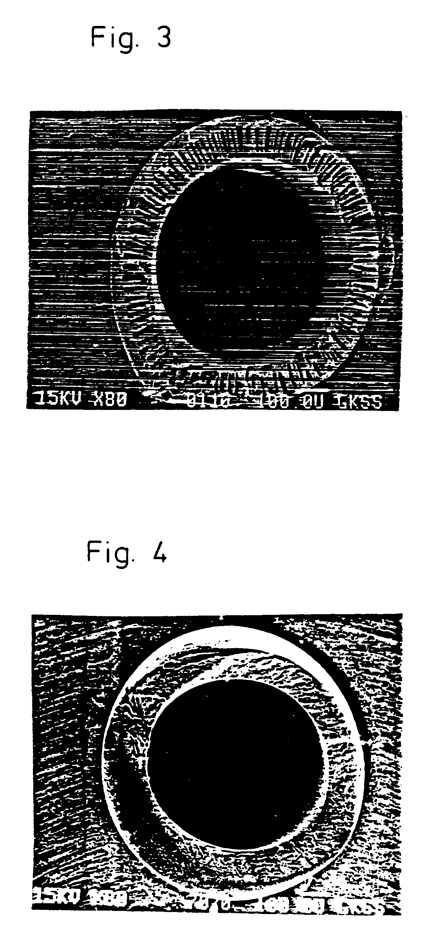

Die Erfindung wird anhand von Ausführungsbeispielen mittels der Fig. 1 - 4 sowie der Tabellen 1 - 8 im folgenden näher beschrieben.

Inbesondere wird die Herstellung von integralasymmetrischen Hohlfadenmembranen aufgezeigt, die nach dem Prinzip des Trocken-Naß-Spinnprozesses gefertigt werden. Dabei wird die Polymerlösung durch eine Ringdüse, die in der Mitte eine Hohlnadel enthält, gedrückt. Durch die Hohlnadel wird gleichzeitig ein Innenfluid zugeführt, das entweder nur zur Füllung des Fadenvolumens dient und ein kollabieren vor Abschluß des Fällvorganges verhindert, oder das als Fällmittel wirkt und so eine Fällung des Hohlfadens von innen heraus bewirkt.

Nach dem Austritt aus der Spinndüse wird der Hohlfaden durch eine Luftstrecke in das Fällbad (Trocken-Naß-Spinnverfahren) gesponnen.

Die Eigenschaften der entsprechenden Hohlfäden werden bestimmt

- durch die Zusammensetzung der Polymerlösung (wichtig ist eine möglichst hohe Viskosität von etwa (10.000 - 100.000 cP) 10 - 100 Pa•s)
- durch die Spinnbedingungen
- durch die Nachbehandlung von Hohlfäden.

Die Polymerlösungen bestehen aus 10 - 35 Gew.-% Polyetherimid (Ultem™; General Electric) - insbesondere Lösungen mit 20 - 28 Gew.-% Polyetherimid (PEI) - und alternativ aus

1. einem mit Wasser mischbaren Lösungsmittel wie z. B. N-Methylpyrrolidon (NMP), Dimethylformamid (DMF), Dimethylacetamid (DMA), N-Formylpiperidin (NFP) oder

2. Lösungsmittel wie unter 1. und zusätzlichem wasserlöslichem Quellmittel wie Lactonen (z. B. $\gamma$-Butyrolacton, GBL), oder Dimethylsulfoxid (DMSO).

Durch das Quellmittel GBL kann zum einen die Geschwindigkeit des Lösungsmittelaustauschs beim Fällvorgang verringert und dadurch die morphologischen Eigenschaften der Hohlfäden (Anzahl und Größe der Makroporen) beeinflußt und zum anderen die für den Spinnvorgang benötigte, möglichst hohe Viskosität erreicht werden, ohne die Polymerkonzentration erhöhen oder ein zusätzlichen Polymer zugeben zu müssen. Eine Erhöhung der Polymerkonzentration würde zu sehr dichten Membranen führen, während man durch die Zugabe von GBL im Gegenteil eine noch offenere Membran bei gleichzeitiger Viskositätserhöhung erhält.

In Tab. 1 sind verschiedene PEI-Lösungen zusammengestellt, die eine etwa gleiche Viskosität aufweisen ($\eta$ = 30.000 cP = 30 Pa•s).

Als Innenfluid und für das äußere Fällbad kann reines Wasser, lösungsmittelhaltiges Wasser oder wäßrige Lösungen organischer Verbindungen (wie z. B. mehrwertige Alkohole Glycerin, Ethylenglycol) verwendet werden. Durch die Zusätze zum Wasser wird die Fällgeschwindigkeit beeinflußt und dadurch ändern sich die morphologischen Eigenschaften des Hohlfadens. Soll das Innenfluid keine Fäll- sondern nur Füllfunktion ausüben, wird eine inerte Flüssigkeit, z. B. Siliconöl, benutzt.

Durch geeignete Auswahl von Innenfluid und Fällbadmedium können Hohlfäden gesponnen werden, die eine die Trenneigenschaften bestimmende sehr dünne Haut entweder auf der Innen- oder Außenseite oder aber auf beiden Seiten enthalten.

Variable Spinnbedingungen sind die Abmessungen der Spinndüse, der Fluß von Polymerlösung und Innenfluid (Spinngeschwindigkeit), der Abstand zwischen Düse und äußerem Fällbad und die Spinntemperatur.

Die Abmessungen der benutzten Spinndüse sind in Tab. 2 zusammengestellt.

Der Abstand zwischen Düse und Fällbad betrug 0,9 - 1,0 m. Es wurde bei Raumtemperatur gearbeitet.

Eine Nachbehandlung der gefällten Hohlfäden kann zur Entfernung von Lösungsmittelresten und zur Konditionierung der Membranstruktur erforderlich sein. Nach dem Waschen mit Wasser bei Raumtemperatur wurden daher einige Hohlfäden alternativ mit Wasser bei 90°C oder mit organischen Flüssigkeiten, die

EP 0 291 679 B1

PEI nicht lösen, sich aber mit dem benutzten Lösungsmittel mischen (Isopropanol, Methanol, Aceton), behandelt.

Zur Herstellung von Kompositmembranen wurde die Beschichtung mit Silicon (VP7660, Wacker Chemie, München) und mit Polymethylpenten (TPX MX002, Mitsui, Japan) erprobt. Die Beschichtung erfolgte durch Hindurchsaugen der verdünnten Beschichtungslösung durch das Lumen der Hohlfäden und anschließendes Durchsaugen von Luft.

Die Permeabilitätsmessungen wurden mit den Gasen Sauerstoff, Stickstoff und Helium bei einer transmembranen Druckdifferenz von 5 bar durchgeführt. Der höhere Druck herrschte in der Regel auf der Innenseite der HF-Membran, d. h. die Permeationsrichtung war von innen nach außen. Bei den Messungen mit Helium wurden einige Proben alternativ auch mit Druck von außen beaufschlagt. Das Verhältnis der Permeabilitäten der Gase A und B wird als Selektivität bezeichnet, $\alpha = P_A/P_B$.

Bei den nachfolgend aufgeführten Versuchen wurde als Innenfluid vollentsalztes Wasser und als Fällbadmedium Leitungswasser benutzt. Die Temperatur der Polymerlösungen und des Innenfluids betrugen 20± 2° C, die Temperatur des Fällbades 6 - 15° C. Die Hohlfäden wurden mit Leitungswasser bei Raumtemperatur gewaschen (~ 4 h) und dann bei 70° C im Trockenschrank getrocknet. Alternativ wurden die gewaschenen, aber noch nicht getrockneten Hohlfäden einer Nachbehandlung mit 90° warmem Wasser oder mit organischen Agenzien unterzogen.

Die Zusammensetzungen der verwendeten Polymerlösungen sind in Tab. 3, die Nachbehandlungsmethoden in Tab. 4 angegeben.

Tab. 5 zeigt zwei Beispiele für die Herstellung von Hohlfadenmembranen und ihre Eigenschaften.

Der Einfluß des Quellmittels GBL auf die Morphologie der HF-Membranen ist mit Hilfe von REM-Aufnahmen der Querschnitte in den Fig. 1 - 4 dargestellt.

Bei 25 Gew.-% PEI, Lösung I und keinem Quellmittel erhält man Hohlfäden mit sehr vielen Kavernen (Makroporen), die nahezu über die gesamte Wanddicke reichen (Fig. 1). Durch Erhöhung des Polymergehalts auf 28 %, Lösung II, wird die Anzahl der Kavernen verringert, sie reichen nicht mehr bis zum äußeren Rand, es bleibt ein schmaler Bereich mit Schwammstruktur (Fig. 2). Die Zugabe von 30 % GBL, Lösung V bewirkt, daß die Anzahl der Kavernen reduziert wird (Fig. 3). Durch Erhöhung des GBL-Anteils auf 40 %, Lösung VI, erhält man eine reine Schwammstruktur ohne Kavernen (Fig. 4).

Der äußere Durchmesser der in Fig. 1 - 4 gezeigten Hohlfäden beträgt 1,0 - 1,1 mm, der innere Durchmesser 0,7 - 0,8 mm.

Die Auswirkungen der Zusammensetzung der Polymerlösung - inbesondere der Einfluß des GBL-Gehaltes - auf die Permeabilität und Selektivität für die Gase Sauerstoff, Stickstoff und Helium sind in der Tab. 6 - 8 zusammengestellt.

Tab. 6 zeigt die Sauerstoffpermeabilitäten für unbeschichtete HF-Membranen.

Im Gegensatz hierzu werden für unbeschichtete, poröse HF-Membranen aus Polysulfon (Henis, J.M.S.; Tripodi, M.K; Multicomponent membranes for gasseparations, US-PS 4,230,463, angemeldet: 13.9.1977) Permeabilitäten für Luft von 0,04 - 2,6 $m^3/m^2$ .h.bar und für HF-Membranen aus Celluloseacetat (nachbehandelt mit warmem Wasser) von 0,07 - 0,16 $m^3/m^2$.h.bar angegeben. Durch spezielle Nachbehandlung (Trocknung durch Lösungsmittelaustausch Isopropanol/Pentan) wird für die Polysulfon HF-Membran eine Luft-Permeabilität von 4,1 $m^3/m^2$.h.bar erreicht.

Die erfindungsgemäß hergestellten HF-Membranen weisen nach einer Nachbehandlung mit warmen Wasser oder nach einem einfachen Lösungsmittelaustausch mit Isopropanol oder Aceton (ohne weiteren Austausch des Isopropanols bzw. des Acetons mit einem Kohlenwasserstoff) etwa 3-fach höhere Permeationsraten auf. Gemessen wurden diese Permeabilitäten mit Sauerstoff. Da die Selektivität für $O_2/N_2$ bei porösen Membranen etwa 1,0 beträgt, sind sie von der Meßmethode her mit den von Henis und Tripodi gemessenen Luftpermeabilitäten vergleichbar.

Durch Erhöhung der Innenfluidtemperatur, Verringerung des PEI-Gehaltes auf etwa 20 % bei gleichzeitiger Erhöhung des GBL-Gehaltes auf über 60 % sind noch höhere Permeabilitäten (auch ohne Nachbehandlung) zu erreichen.

In Tab. 7 sind die Sauerstoffpermeabilitäten und die Selektivität für $O_2/N_2$ von Kompositmembranen aus PEI mit Siliconbeschichtung aufgeführt.

Für Sauerstoff/Stickstoff beträgt die intrinsische Selektivität von Polydimethylsiloxan 2,15 und für Polysulfon 6,1. Die intrinsische Selektivität von PEI ist nicht bekannt, jedoch wurden mit asymmetrischen Flachmembranen Werte für $O_2/N_2$ = 9 und für $He/N_2$ = 260 gemessen.

Aus der ersten Spalte der Tab. 7 ist zu entnehmen, daß die mit Polydimethylsiloxan (PDMS) beschichteten HF-Membranen aus den Lösungen I, II und III ohne Nachbehandlung sehr viel höhere Selektivitäten (5,7 = 7,0) aufweisen als sie der Siliconbeschichtung entsprechen würden, d. h. diese Membranen haben eine dichte, nahezu porenfreie Haut aus PEI. Die Permeabilitäten sind entsprechend

4

niedrig (0,003 - 0,006 $m^3/m^2$.h.bar). Diese Membranen haben eine ähnliche Struktur wie die bei Henis und Tripodi beschriebenen, für die Selektivitäten von 3,4 - 5,0 und Permeabilitäten für Sauerstoff von 0,02 - 0,06 $m^3/m^2$.h.bar angegeben werden.

Die aus den Lösungen IV, V und VI hergestellten HF-Membranen zeigen eine Selektivität, die nahe an der des Beschichtungsmaterials PDMS liegt (2,4 - 3,0). Durch Nachbehandlung erhält man Membranen mit der Selektivität von Silicon (ca. 2,0) bei gleichzeitig sehr hohen Permeabilitäten für Sauerstoff bis zu 0,9 $m^3/m^2$.h.bar. Bei den HF-Membranen aus Lösung VI konnte durch eine zusätzliche Beschichtung mit Polymethylpenten die Selektivität für $O_2/N_2$ bei einer immer noch relativ hohen Permeabilität von 0,5 $m^3/m^2$.h.bar gesteigert werden.

Die in Tab. 8 zusammengefaßten Versuchsergebnisse für Silicon-beschichtete HF-Membranen aus PEI zeigen, daß die erreichten Selektivitäten für $He/N_2$ im Bereich der nach DE-PS 34 20 373 hergestellten Flachmembranen aus PEI liegen. Die He-Permeabilitäten liegen allerdings um den Faktor 2 - 3 niedriger als die der Flachmembranen. Dieser Nachteil wird aber in der Praxis durch das bei HF-Membranen günstigere Verhältnis von Membranfläche zu Modulvolumen (Packungsdichte) mehr als ausgeglichen.

An einzelnen Proben aus Lösung I wurden auch ohne Beschichtung Selektivitäten um etwa 200 bei Permeabilitäten von etwa 0,07 $m^3/m^2$.h-bar gemessen.

Tabelle 1

| Polyetherimid-Lösungen mit etwa gleicher Viskosität | | | | |
|---|---|---|---|---|
| Lösungsmittel | GBL-Gehalt % | PEI-Gehalt % | Viskosität $\eta_{20°C}$ | |
| | | | (in cP) | in Pa•s |
| NMP | 40 | 25 | 31.000 | 31 |
| NMP | - | 28 | 31.000 | 31 |
| DMF | - | 30,4 | 29.000 | 29 |
| DMA | - | 30,4 | 29.000 | 29 |

Tabelle 2

| Abmessungen der Spinndüse | | |
|---|---|---|
| Durchmesser der Ringdüse | mm | 1,3 |
| Aussendurchmesser der Hohlnadel | mm | 0,90 |
| Innendurchmesser der Hohlnadel | mm | 0,46 |

Tabelle 3

| Polymerlösungen | | | | | |
|---|---|---|---|---|---|
| Lösung | PEI % | NMP % | GBL % | $\eta_{20°C}$ | |
| | | | | (in cP) | in Pa•s |
| I | 25 | 75 | - | 11.000 | 11 |
| II | 28 | 72 | - | 31.000 | 31 |
| III | 25 | 70 | 5 | 13.000 | 13 |
| IV | 25 | 55 | 20 | 19.000 | 19 |
| V | 25 | 45 | 30 | 22.000 | 22 |
| VI | 25 | 35 | 40 | 31.000 | 31 |

Tabelle 4

| Nachbehandlungsmethoden | | | | |
|---|---|---|---|---|
| | Medium | Temperatur ° C | Dauer h | Trockentemperatur ° C |
| A | Wasser | 90 | 2 | 70 |
| B | Isopropanol | ~ 20 | ~ 12 | ~ 20 |
| C | Aceton | ~ 20 | ~ 12 | ~ 20 |

Tabelle 5
Beispiele für die Herstellung von HF-Membranen

| | | Beispiel | |
|---|---|---|---|
| | | 1 | 2 |
| Spinndüse | | s. Tab. 2 | |
| Spinnbedingungen | | | |
| Innenfluid | | vollentsalztes Wasser | |
| Innenfluid-Temperatur | °C | 22 | 22 |
| Innenfluid-Fluß | g/min | 7,0 | 7,0 |
| Polymerlösung | | V | VI |
| Polymerlösung-Temperatur | °C | 22 | 22 |
| Polymerlösung-Fluß | g/min | 5,3 | 4,6 |
| Fällbad | | Leitungswasser | |
| Fällbadtemperatur | °C | 6 | 15 |
| Abstand Düse-Fällbad | m | 0,95 | 0,92 |
| Eigenschaft der HF | | | |
| Durchmesser außen | mm | 1,1 | 1,1 |
| Durchmesser innen | mm | 0,8 | 0,8 |
| Unbeschichtete HF | | | |
| P-$O_2$ ohne Nachbehandlung $B$ | $m^3/m^2$.h.bar | 2,4 | - |
| $\alpha$ $O_2/N_2$ | | 0,95 | - |
| P-$O_2$ mit Nachbehandlung | $m^3/m^2$.h.bar | 12 | - |
| $\alpha$ $O_2/N_2$ | - | 0,94 | - |
| Beschichtete HF (VP7660) | | | |
| P-$O_2$ mit Nachbehandlung $B$ | $m^3/m^2$.h.bar | 0,7 | - |
| $\alpha$ $O_2/N_2$ | | 2,3 | - |
| P-$O_2$ mit Nachbehandlung A | $m^3/m^2$.h.bar | - | 0,8 |
| $\alpha$ $O_2/N_2$ | - | - | 2,0 |

P-$O_2$ = Permeabilität f. Sauerstoff

$\alpha$ $O_2/N_2$ = Selektivität f. Sauerstoff/Stickstoff

7

Tabelle 6

Sauerstoffpermeabilitäten für unbeschichtete HF-Membranen.
Die Permeabilitäten sind in $m^3/m^2.h.bar$ angegeben.

| Lösung \ P-$O_2$ | Nachbehandlung | | | |
|---|---|---|---|---|
| | - | A | B | C |
| I | 0,03 | - | - | - |
| II | 0,03 | 0,2 | 0,2 | - |
| III | 0,02 | - | 10 | 29 |
| IV | - | 11 | 11 | 12 |
| V | 2,4 | - | 12 | 9 |

Tabelle 7

Sauerstoffpermeabilität und Selektivität für $O_2/N_2$, HF-Kompositmembranen aus PEI, Beschichtung Silicon VP7660
P-$O_2$ = Permeabilität für Sauerstoff in $m^3/m^2.h.bar$

| Lösung-Nr. | Nachbehandlung | | | | | | | |
|---|---|---|---|---|---|---|---|---|
| | - | | A | | B | | C | |
| | P-$O_2$ | $\alpha \frac{O_2}{N_2}$ | P-$O_2$ | $\alpha \frac{O_2}{N_2}$ | P-$O_2$ | $\alpha \frac{O_2}{N_2}$ | P-$O_2$ | $\alpha \frac{O_2}{N_2}$ |
| I | 0,003 | 7,0 | - | - | - | - | - | - |
| II | 0,003 | 6,7 | 0,2 | 1,3 | 0,1 | 1,7 | - | - |
| III | 0,006 | 5,7 | - | - | - | - | 0,4 | 2,5 |
| IV | 0,02 | 2,7 | 0,9 | 2,1 | 0,4 | 2,3 | 0,4 | 2,3 |
| V | 0,03 | 2,4 | - | - | 0,7 | 2,3 | 0,5 | 2,3 |
| VI | 0,04 | 3,0 | 0,8 | 2,0 | 0,6 | 1,7 | - | - |

Tabelle 8

Helium-Permeabilität und Selektivität für He/N$_2$, HF-Membranen mit Silicon beschichtet, keine Nachbehandlung.

P-He = Permeabilität für Helium in m$^3$/m$^2$.h.bar

P$_i$ = Druck auf der Innenseite der HF-Membran

P$_a$ = Druck auf der Außenseite der HF-Membran

| Lösung Nr. | $P_i > P_a$ | | $P_i < P_a$ | |
|---|---|---|---|---|
| | P-He | $\dfrac{He}{N_2}$ | P-He | $\dfrac{He}{N_2}$ |
| I | 0,07 | 160 | 0,05 | 203 |
| II | 0,06 | 200 | - | - |
| III | 0,15 | 130 | - | - |

**Patentansprüche**

1. Verfahren zur Herstellung einer integralasymmetrischen Membran zur Trennung von Flüssig- oder Gasgemischen, bei dem Membranbildner und Lösungsmittel gemischt, in eine geometrische Form gebracht und danach die Form in Kontakt mit Fällmittel behandelt wird, wobei der Membranbildner ein Polyetherimid ist, das vor der Fällung mit einem wassermischbaren Lösungsmittel zusammengeführt wird, sowie einem Quellmittel, dadurch gekennzeichnet, daß das Quellmittel ein Element aus der Gruppe der Lactone ist.

2. Verfahren zur Herstellung einer integralasymmetrischen Membran zur Trennung von Flüssig- oder Gasgemischen, bei dem Membranbildner und Lösungsmittel gemischt, in eine geometrische Form gebracht und danach die Form in Kontakt mit Fällmittel behandelt wird, wobei der Membranbildner ein Polyetherimid ist, das vor der Fällung mit einem wassermischbaren Lösungsmittel zusammengeführt wird, sowie einem Quellmittel, dadurch gekennzeichnet, daß das Quellmittel Dimethylsulfoxid ist.

3. Verfahren nach einem oder beiden der Ansprüche 1 oder 2, dadurch gekennzeichnet, daß die Polymerlösung aus 10 - 35 Gew.- % Polyetherimid und einem Lösungsmittel aus der Gruppe N-Methylpyrrolidon (NMP), Dimethylformamid (DMF), Dimethylacetamid (DMA) oder N-Formylpiperidin (NFP) besteht.

4. Verfahren nach Anspruch 1, dadurch gekennzeichnet, daß das Lacton $\gamma$-Butyrolacton (GBL) ist.

5. Verfahren nach einem oder mehreren der Ansprüche 1 bis 4, dadurch gekennzeichnet, daß als Fällbad Wasser, lösungs- und/oder quellmittelhaltiges Wasser oder wäßrige Lösungen organischer Substanzen, wie z.B. mehrwertige Alkohole, verwendbar ist.

6. Verfahren nach Anspruch 5, dadurch gekennzeichnet, daß das Fällbad als Innenfluid bei der Herstellung von Hohlfadenmembranen verwendbar ist.

**7.** Verfahren nach einem oder mehreren der Ansprüche 1 bis 6, dadurch gekennzeichnet, daß als Innenfluid eine inerte Flüssigkeit, wie z.B. Siliconöl, verwendet wird.

**8.** Membranen nach dem Verfahren gemäß einem oder mehreren der Ansprüche 1 bis 7, dadurch gekennzeichnet, daß sie eine mikroporöse, beschichtbare Haut mit wahlweise kavernenhaltiger Unterstruktur oder Schwammstruktur oder eine dichte, porenfreie Haut aufweisen.

**Claims**

**1.** A method of producing an integral asymmetric membrane for separating mixtures of liquids or gases, in which membrane former and solvent are mixed, brought to a geometric shape after which the shape is treated in contact with a precipitating agent, the membrane former being a polyether imide which prior to precipitation is combined with a water-miscible solvent, and also a swelling agent, characterised in that the swelling agent is an element from the lactone group.

**2.** A method of producing an integral asymmetric membrane for separating mixtures of liquids or gases, in which membrane former and solvent are mixed, brought to a geometric shape after which the shape is treated in contact with a precipitating agent, the membrane former being a polyether imide which prior to precipitation is combined with a water-miscible solvent, and also a swelling agent, characterised in that the swelling agent is dimethyl sulphoxide.

**3.** A method according to one or both of claims 1 or 2, characterised in that the polymer solution consists of 10 to 35% by weight polyether imide and a solvent from the group comprising N-methyl pyrrolidone (NMP), dimethyl formamide (DMF), dimethyl acetamide (DMA) or N-formyl piperidine (NFP).

**4.** A method according to claim 1, characterised in that the lactone is $\gamma$-butyrolactone (GBL).

**5.** A method according to one or more of claims 1 to 4, characterised in that water, solvent and/or swelling agent-containing water or aqueous solutions of organic substances such as for example multivalent alcohols can be used as the precipitating bath.

**6.** A method according to claim 5, characterised in that the precipitating bath can be used as an inner fluid when producing hollow thread membranes.

**7.** A method according to one or more of claims 1 to 6, characterised in that an inner liquid such as for example silicone oil is used as the inner fluid.

**8.** Membranes according to the method according to one or more of claims 1 to 7, characterised in that they have a microporous coatable skin with optionally a cavity-containing substructure or a sponge structure or a dense pore-free skin.

**Revendications**

**1.** Procédé de fabrication d'une membrane asymétrique intégrale, destinée à séparer des mélanges de liquides ou de gaz, dans lequel on mélange le solvant et le matériau formant la membrane, on leur donne une forme géométrique puis on traite cette forme en contact avec un agent de précipitation, le matériau formant la membrane étant un polyétherimide, qui avant la précipitation est réuni à un solvant miscible à l'eau, ainsi qu'à un agent gonflant, caractérisé en ce que l'agent gonflant est un élément du groupe des lactones.

**2.** Procédé de fabrication d'une membrane asymétrique intégrale, destinée à séparer des mélanges de liquides ou de gaz, dans lequel on mélange le solvant et le matériau formant la membrane, on leur donne une forme géométrique puis on traite cette forme en contact avec un agent de précipitation, le matériau formant la membrane étant un polyétherimide, qui avant la précipitation est réuni à un solvant miscible à l'eau, ainsi qu'à un agent gonflant, caractérisé en ce que l'agent gonflant est le diméthylsulfoxyde.

3. Procédé selon l'une des revendications 1 ou 2, ou les deux, caractérisé en ce que la solution de polymères est constituée de 10-35 % en poids de polyétherimide et d'un solvant choisi dans l'ensemble comprenant la N-méthylpyrrolidone (NMP), le diméthylformamide (DMF), le diméthylacétamide (DMA) ou la N-formylpipéridine (NFP).

4. Procédé selon la revendication 1, caractérisé en ce que la lactone est la gamma-butyrolactone (GBL).

5. Procédé selon l'une ou plusieurs des revendications 1 à 4, caractérisé en ce qu'on peut utiliser comme bain de précipitation de l'eau, de l'eau contenant un solvant et/ou un agent gonflant, ou encore des solutions aqueuses de substances organiques, comme par exemple des polyalcools.

6. Procédé selon la revendication 5, caractérisé en ce qu'on peut utiliser le bain de précipitation comme fluide interne lors de la fabrication des membranes à fibres creuses.

7. Procédé selon l'une ou plusieurs des revendications 1 à 6, caractérisé en ce qu'on utilise comme fluide interne un liquide inerte, par exemple une huile de silicone.

8. Membranes obtenues par le procédé selon l'une ou plusieurs des revendications 1 à 7, caractérisées en ce qu'elles présentent une peau microporeuse pouvant être enduite, comportant une structure sous-jacente ou spongieuse contenant éventuellement des cavités, ou encore une peau dense exempte de pores.

Fig. 1

Fig. 2

Fig. 3

Fig. 4